# EUROPÄISCHE PATENTSCHRIFT

(11) **EP 3 445 971 B1**
(45) Veröffentlichungstag und Bekanntmachung des Hinweises auf die Patenterteilung: **22.01.2020**
(21) Anmeldenummer: 17717155.0
(22) Anmeldetag: 12.04.2017
(51) Int. Cl.: F03D 13/20, F03D 13/10, E04H 12/08, E04H 12/10

(54) **ÜBERGANGSKÖRPER FÜR EINEN TURM EINER WINDKRAFTANLAGE, TURM MIT DIESEN SOWIE VERFAHREN ZU DESSEN ERRICHTUNG**
TRANSITION BODY FOR A TOWER OF A WIND TURBINE, TOWER HAVING SAME AND METHOD FOR ERECTING THE LATTER
CORPS DE RACCORDEMENT POUR PYLÔNE D'ÉOLIENNE, PYLÔNE COMPRENANT CE CORPS DE RACCORDEMENT AINSI QUE SON PROCÉDÉ DE CONSTRUCTION

(30) Priorität: 21.04.2016 DE 102016206755
(43) Veröffentlichungstag der Anmeldung: 27.02.2019
(73) Patentinhaber: ThyssenKrupp Steel Europe AG, 47166 Duisburg (DE); thyssenkrupp AG, 45143 Essen (DE)
(72) Erfinder: HIRT, Mark, 44791 Bochum (DE); PATON, Adrian, 46539 Dinslaken (DE); ROSKOSCH, David Johannes, 40237 Düsseldorf (DE); TLAUKA, Patrick, 46117 Oberhausen (DE)
(74) Vertreter: ThyssenKrupp Steel Europe AG
(86) Internationale Anmeldenummer: PCT/EP2017/058738
(87) Internationale Veröffentlichungsnummer: WO 2017/182349

(56) Entgegenhaltungen:
- GB-A- 2 419 150
- US-A1- 2013 283 722

## Beschreibung

Die Erfindung betrifft einen Übergangskörper zur Anordnung zwischen einem oberen Turmabschnitt und einem unteren Turmabschnitt eines Turms für eine Windkraftanlage. Ferner betrifft die Erfindung einen Turm für eine Windkraftanlage mit einem oberen Turmabschnitt in Form eines Rohrturms, einem mindestens drei Seitentürme und einen zentralen Stützturm aufweisenden unteren Turmabschnitt und einem den oberen Turmabschnitt mit dem unteren Turmabschnitt verbindenden Übergangskörper sowie ein Verfahren zur Errichtung eines solchen Turms.

Um den Wirkungsgrad von Windkraftanlagen zu verbessern, werden die Naben in immer größeren Höhen angeordnet sowie größere Rotoren und leistungsstärkere Generatoren eingesetzt. Dies erfordert Turmsegmente mit immer größeren Durchmessern und größeren Wandstärken, damit die Türme von Windkraftanlagen eine ausreichende Steifigkeit, Knickfestigkeit und Dauerfestigkeit aufweisen. Bereits vorgefertigte rohrförmige Turmsegmente, deren Durchmesser einen bestimmen Wert, etwa 4,4 m, deutlich übersteigen, können nur mit immensem Aufwand an den Montageort der Windkraftanlage transportiert werden. Dies liegt insbesondere an den Breiten der für den Transport zur Verfügung stehenden Straßen und an den Durchfahrtshöhen der zu passierenden Brücken. Aber selbst der Transport über Wasserwege ist bei sehr großen Turmsegmenten äußerst aufwendig.

Ein möglicher Lösungsansatz, der beispielsweise in der DE 603 17 372 T2 und auch in der WO 2009/048955 A1 vorgeschlagen wird, ist die sogenannte längsorientierte Bauweise, die insbesondere im unteren Bereich des Turms angewendet wird. Dabei werden bogenförmige Turmabschnitte an die Baustelle transportiert, die dann vor Ort zu rohrförmigen Turmsegmenten zusammengesetzt werden. Die Verbindung der bogenförmigen Turmabschnitte kann durch Verschraubungen mittels entsprechender Flansche erfolgen. Nachteilig an der längsorientierten Bauweise ist jedoch, dass sich die bogenförmigen Turmabschnitte während des Transports verformen können, was die Montage vor Ort erheblich erschweren oder gar verhindern kann. Zudem ist der Montageaufwand deutlich erhöht.

Zudem sind Windkraftanlagen bekannt, bei denen der Rotor und die Gondel mit dem Generator auf einem Fachwerkturm montiert sind. Diese Bauweise hat sich insbesondere bei kleinen und niedrigen Anlagen bewährt. Bei größeren und höheren Anlagen ist der Montageaufwand nämlich unverhältnismäßig hoch, da die Montage der Einzelteile des Fachwerks fast ausschließlich vor Ort erfolgen muss und somit eine zeit- und kostensparende Vorkonfektionierung kaum möglich ist.

Aus der DE 10 2006 056 274 A1 ist ein Turm einer Windkraftanlage bekannt, der im unteren Bereich als Gitterturm (Fachwerkturm) mit wenigstens drei Eckstielen und im oberen Bereich als Rohrturm mit runden Querschnitten ausgebildet ist. Der obere Turmabschnitt und der untere Turmabschnitt sind durch einen Übergangskörper miteinander verbunden. Der Übergangskörper ist dabei in Form eines Kegelstumpfmantels ausgebildet, wobei der jeweilige Eckstiel in den Übergangskörper hineinragt und dort durch zwei Längsschweißnähte mit der Außenseite des Kegelstumpfmantels verbunden ist.

Ein gattungsgemäßer Turm ist in der US 2013/0283722 A1 beschrieben.

Die zuvor genannten Hybridtürmen für Windkraftanlagen mit einer sogenannten aufgelösten Turmstruktur, die einen unteren Turmabschnitt in Fachwerkbauweise und einen oberen Turmabschnitt in Form einer Röhre aufweisen, sind mit dem Nachteil behaftet, dass der Übergangskörper zwischen dem oberen und dem unteren Turmabschnitt aufwendig herzustellen sind und aufgrund der Dimensionen einen sehr hohen Transportaufwand erfordern.

Daher liegt der vorliegenden Erfindung die Aufgabe zugrunde, einen Übergangskörper und einen Turm jeweils der eingangs genannten Art derart auszugestalten und weiterzubilden, dass der Herstellungsaufwand gesenkt und der Kraftfluss verbessert werden kann, ohne dass dies zu einem Anstieg des Transportaufwands führt. Als nebengeordnete Aufgabe gehen diese Anforderungen mit einer Reduzierung der Kosten sowie einer Verbesserung der Ermüdungsbeständigkeit der Bauteile einher. Ein Verfahren zur Errichtung eines entsprechenden Turms mit diesem Übergangskörper ist ein weiterer Nebenaspekt der Aufgabe.

Diese Aufgabe ist bei einem Übergangskörper nach dem Oberbegriff des Anspruchs 1 dadurch gelöst, dass der Übergangskörper durch eine massive Platte gebildet wird, welche zum Transport aus einzelnen Segmenten besteht, und am Installationsort ohne Einsatz des Schweißens zusammengebaut werden kann. Vorzugsweise sind die Segmente aus Grobblech durch Beschnitt und Nachbearbeitung hergestellt.

Zudem ist die genannte Aufgabe bei einem Turm nach dem Oberbegriff des Anspruchs 10 dadurch gelöst, dass der untere Turmabschnitt einen zentralen Stützturm umfasst, der bevorzugt dem Durchmesser des unteren Ende des oberen Turmabschnitts entspricht, sowie mehrere um den zentralen Stützturm angeordnete Seitentürme, welche vorzugsweise einen kleineren Durchmesser von ca. 1,0m bis 1,8m aufweisen, wobei die Seitentürme und der Stützturm mittels eines Übergangskörpers untereinander und mit dem oberen Turmabschnitt verbunden sind und der Übergangskörper nach einem der Ansprüche 1 bis 9 ausgebildet ist.

Des Weiteren wird die Aufgabe der Verfahrens zum Errichten eines Turms nach dem Oberbegriff der Ansprüche 12 und 13 dadurch gelöst, dass die Segmente des Übergangskörpers erst bei der Montage an den unteren Turmabschnitt oder vorab ggf. unter Zuhilfenahme einer temporären Montagehilfe zusammengesetzt werden.

Erfindungsgemäß ist also ein Übergangskörper zur Anordnung zwischen einem oberen Turmabschnitt und einem unteren Turmabschnitt eines Turms für eine Windkraftanlage, wobei der untere Turmabschnitt einen zentralen Stützturm und mehrere um den Umfang verteilte äußere Seitentürme umfasst, wobei der Übergangskörper als massiver Plattenkörper ausgebildet ist und Mittel zur Verbindung mit dem oberen Turmabschnitt, dem unteren zentralen Stützturm und den äußeren Seitentürmen aufweist, wobei der Übergangkörper aus mehreren Segmenten besteht und wobei der Übergangskörper erfindungsgemäß aus mehreren Lagen von Segmenten aufgebaut ist. Ein massiver Körper widerspricht zwar der allgemeinen Bestrebung des Leichtbaus, was insbesondere auch bei Windkraftanlagen aufgrund des Transports, Montage und Gewicht der Konstruktion eine Rolle spielt. Allerdings wird durch einen massiven Plattenkörper eine effiziente, einfache Verteilung der Kräfte gewährleistet. Im Vergleich zu dünnwandigeren jedoch großvolumigeren Übergangskörpern, wie sie aus dem Stand der Technik bekannt sind, kann trotz der massiven Ausführung durch den kompakten Plattenkörper eine Kraftverteilung bei vergleichbarem oder auch reduziertem Gewicht bereitgestellt werden. Durch die Aufteilung des massiven Plattenkörpers in vertikaler und/oder horizontaler Richtung wird der Transport als auch ggf. die Montage vereinfacht und eine Herstellung, bevorzugt aus Grobblech, wird vereinfacht, da kleiner dimensioniertes Ausgangsmaterial verwendet werden kann. Darüber hinaus kann die Anzahl und Komplexität der Bauteile wesentlich reduziert und auf das Schweißen innerhalb dieser Baugruppe gänzlich verzichtet werden. Durch die erfindungsgemäße Aufteilung in mehrere Lagen von Segmenten kann die Bauteildicke der einzelnen Segmente reduziert bzw. die Dicke des Übergangskörpers erhöht und an die jeweiligen Anforderungen, wie Festig- oder Steifigkeit unter Berücksichtigung der Turmhöhe, Anzahl der Seitentürme und dergleichen, des Turms angepasst werden. Die einzelnen Lagen weisen hierbei bevorzugt die gleiche Dicke auf, allerdings sind auch Ausführungsformen mit unterschiedlich dicken Lagen möglich, wodurch eine modulare Zusammenstellung für den jeweiligen Turm erfolgen kann.

In einer bevorzugten Ausführungsform zeichnet sich der Übergangskörper dadurch aus, dass die Segmente im Wesentlichen eine gleiche Form aufweisen. Dies hat den Vorteil einheitlicher Bauteile, wodurch sich die Herstellung aufgrund der reduzierten Variantenvielfalt und höherer Stückzahl sowie die Montage aufgrund der Austauschbarkeit vereinfacht. Insbesondere ist bei der Aufteilung der Segmente eine Trennung entlang von Symmetrieachsen oder in deren Nähe bevorzugt, da hierdurch eine einfache Aufteilung erfolgen kann. Bei der Aufteilung ist in Hinblick auf den Transport bevorzugt, dass die Breite eines Segments kleiner als 4,4m ist.

Besonders bevorzugte Ausführungsformen des Übergangskörpers sind dadurch gekennzeichnet, dass die Anzahl der Segmente der Anzahl der Seitentürme entspricht. Ein erfindungsgemäßer Turm weist in der Regel mindestens drei Seitentürme auf, wodurch sich eine dreieckige Grundform für den Übergangskörper ergibt. Bei vier Seitentürmen würden sich entsprechend quadratische bzw. kreuzförmige und bei mehr Seitentürmen aufgrund der gleichmäßigen Verteilung um den zentralen Stützturm entsprechende Polygone Grundformen ergeben. Neben einer Aufteilung des Übergangskörpers in zum Beispiel zwei Hälften, bei der neben den Mitteln zum Verbinden mit dem zentralen Stützturm und dem oberen Turmabschnitt auch unter Umständen ein Mittel zum Verbinden mit einem Seitenturm auf mehrere Segmente aufgeteilt wird, ist allerdings eine Aufteilung entsprechend der Seitentürme bevorzugt, so dass jedes Segment jeweils vollständige Mittel zum Verbinden mit einem Seitenturm sowie einen Teil der Mittel zum Verbinden mit dem zentralen Stützturm und dem oberen Turmabschnitt aufweist. Hierdurch wird eine für den Kraftfluss nachteilige Einbringung von Trennebenen in die Mittel zur Verbindung mit den Seitentürmen vermieden.

In bevorzugten Ausführungsformen des Übergangskörpers sind die Trennkanten der Segmente in den mehreren Lagen versetzt zueinander angeordnet. Um die Stabilität des Übergangskörpers zu erhöhen, ist es vorteilhaft, die Trennkanten nicht direkt übereinander zu positionieren. Dies kann beispielsweise durch unterschiedlich lange Schenkellängen der Segmente erreicht werden, deren Mittelwert einer Symmetrieachse entsprechen würde, und diese Segmente in den einzelnen Lagen versetzt zueinander angeordnet werden. Alternativ oder kumulativ können die Trennkanten eines Segments selbst mit einem Absatz versehen sein, um eine vertikal durchgängige Trennkante zu vermeiden.

In weiter bevorzugten Ausführungsformen des Übergangskörpers greifen die Segmente formschlüssig ineinander. Hierdurch wird die Positionierung der Segmente zueinander verbessert und gleichzeitig wird die Stabilität des Übergangskörpers verbessert. Der Formschluss kann in horizontaler und/oder vertikaler Richtung, beispielsweise durch Verzahnung, wie einem Schwalbenschwanz, oder Vorsprünge und korrespondierenden Ausnehmungen, erfolgen. Alternativ oder kumulativ sind die Segmente untereinander mit Verbindungsmitteln verbunden. Diese Verbindungsmittel können durch Verschraubungen, Verschweißen oder andere bekannte Verbindungsmethoden dargestellt werden. Durch die Verbindungsmittel werden die Segmente des Übergangskörpers zueinander fixiert, wodurch eine einteilige Montage des Übergangskörpers ermöglicht wird.

In bevorzugten Ausführungsformen des Übergangskörpers sind die Mittel zur Verbindung mit dem oberen Turmabschnitt, dem unteren zentralen Stützturm und den Seitentürmen als Lochkreise mit Durchgangslöchern ausgebildet. Lochkreis ist in diesem Zusammenhang nicht auf kreisrund angeordnete Durchgangslöcher beschränkt, sondern es sind auch abweichende Formen, wie ovale, umfasst, welche beispielsweise durch schräg angeordnete Seitentürme entstehen.

Den verschiedenen Ausführungen der erfindungsgemäßen Übergangskörper ist gemein, dass die Mittel zum Verbinden mit dem oberen Turmabschnitt und dem zentralen Stützturm durch den gleichen Lochkreis oder separate, konzentrische Lochkreise gebildet sind. Der obere Turmabschnitt ist als Rohrturm ausgeführt und auch der untere zentrale Stützturm ist als Rohrturm ausgeführt. Werden jeweils Rohrtürme mit gleichem Flanschdurchmesser verwendet, werden die beiden Flansche mit dem dazwischen angeordneten Übergangskörper direkt miteinander verschraubt. Weichen die Flanschdurchmesser voneinander ab, ist der Übergangskörper mit zwei konzentrisch angeordneten Lochkreisen versehen und der obere Turmabschnitt und der zentrale Stützturm werden jeweils mit dem Übergangskörper verschraubt.

In besonders bevorzugten Ausführungsformen weist der Übergangskörper eine mittige Ausnehmung auf, die vorzugsweise einen Durchmesser aufweist, der dem Innendurchmesser des oberen Turmabschnitts und/oder des unteren zentralen Stützturms entspricht. Hierdurch ist ein vom Boden bis zur Gondel der Windkraftanlage durchgängiger Schacht gegeben, in dem Servicelift, Versorgungsleitungen und dergleichen angeordnet werden können.

Des Weiteren ist erfindungsgemäß ein Turm für eine Windkraftanlage mit einem oberen Turmabschnitt in Form eines Rohrturms und einem unteren Turmabschnitt mit mehreren Seitentürmen und einem den oberen Turmabschnitt mit dem unteren Turmabschnitt verbindenden Übergangskörper, wobei der untere Turmabschnitt einen zentralen Stützturm aufweist, und der Übergangskörper ein Übergangskörper der vorbeschriebenen Art ist. Der obere Turmabschnitt weist einen sich nach oben verjüngenden Durchmesser auf, der im Bereich des Übergangskörpers sein Maximum, welches transportbedingt bei ca. 4,4m liegt, aufweist. Für den zentralen Stützturm gilt prinzipiell die gleiche Beschränkung hinsichtlich des Transports, weshalb dessen maximaler Durchmesser ebenfalls bei ca. 4,4m liegt. Der zentrale Stützturm kann konisch ausgeführt sein. Bevorzugt weist der zentrale Stützturm jedoch einen konstanten Durchmesser auf, der weiter bevorzugt kleiner oder gleich dem unteren maximalen Durchmesser des oberen Rohrturms entspricht. Durch diese Ausführung wird der Turm gestützt und die einzelnen Teilstücke der Türme bleiben gut transportierbar. Um eine ausreichende Tragfähigkeit des unteren Turmabschnitts zu gewährleisten sind um den zentralen Stützturm mehrere weitere Seitentürme angeordnet, die mit dem Übergangskörper verbunden sind. Die Seitentürme sind bevorzugt nicht direkt mit dem Stützturm verbunden, können jedoch untereinander mittels Streben verbunden beziehungsweise versteift sein.

Auch die Seitentürme sind wie der zentrale Stützturm im Wesentlichen als Hohlprofil, insbesondere rohrförmig, ausgebildet. Diese können ebenfalls konstante Durchmesser aufweisen oder auch verjüngt ausgeführt sein. Die mehreren um den Stützturm verteilten Seitentürme sind mit kleineren Durchmessern ausgeführt.

Im Bereich des Übergangskörpers sind in weiteren Ausführungsformen eines erfindungsgemäßen Turms ein Durchtritt im oberen Turmabschnitt vorgesehen, um einen Zugang zu der Oberseite des Übergangskörpers für Montage- und Wartungszwecke zu ermöglichen.

Außerdem ist erfindungsgemäß ein Verfahren zum Errichten eines Turms der zuvor erwähnten Art angegeben, wobei der untere Turmabschnitt aufgestellt wird und der Übergangskörper montiert wird, bevor der obere Turmabschnitt und die Windkraftanlage aufgestellt werden, wobei erfindungsgemäß die Segmente einzeln nacheinander auf dem unteren Turmabschnitt positioniert werden und somit der Übergangskörper der eingangs ausgeführten Art während der Montage gebildet wird. Durch diese Vorgehensweise wird ermöglicht, für die Errichtung des Turms, insbesondere des unteren Turmabschnitts, weitgehend kleinere und häufig kostengünstiger verfügbare Kräne zu verwenden. Die einzelnen Segmente sind auch leichter handhabbar.

Alternativ ist ein erfindungsgemäßes Verfahren zum Errichten eines Turms der zuvor erwähnten Art angegeben, wobei der untere Turmabschnitt aufgestellt wird und der Übergangskörper montiert wird, bevor der obere Turmabschnitt und die Windkraftanlage aufgestellt werden, wobei erfindungsgemäß die Segmente des Übergangskörpers vormontiert oder durch eine temporäre Montagehilfe zueinander fixiert werden und ein vormontierter Übergangskörper der eingangs ausgeführten Art auf dem unteren Turmabschnitt montiert wird. Hierdurch kann der Übergangskörper auf Bodenniveau montiert oder durch Montagehilfen, wie Klemmvorrichtungen, temporär fixiert werden, was die Montage erleichtert und der Übergangskörper kann in einem Montageschritt auf dem unteren Turmabschnitt positioniert werden.

Im Folgenden werden anhand von Figuren einzelne Ausführungsformen näher erläutert. Gleiche oder ähnliche Teile werden sind mit gleichen oder entsprechenden Bezugszeichen versehen und werden ggf. nicht jeweils gesondert erläutert.
Fig. 1 zeigt ein Beispiel eines erfindungsgemäßen Turms.
Fig. 2 zeigt eine Ausführung eines erfindungsgemäßen Übergangskörpers.
Fig. 3 zeigt schematisch den Bereich der Trennkanten eines mehrlagigen Übergangskörpers.
Fig. 4 zeigt einen Bereich eines Übergangskörpers, welcher mit einem oberen und einem unteren Turmabschnitt verbunden ist, die jeweils Flansche mit einem gleichen Flanschdurchmesser aufweisen.
Fig. 5 zeigt einen Bereich eines Übergangskörpers, welcher mit einem oberen und einem unteren Turmabschnitt verbunden ist, wobei die jeweiligen Flansche unterschiedliche Flanschdurchmesser aufweisen.
Fig.6 zeigt einen Bereich eines Übergangskörpers, welcher mit einem Seitenturm verbunden ist.

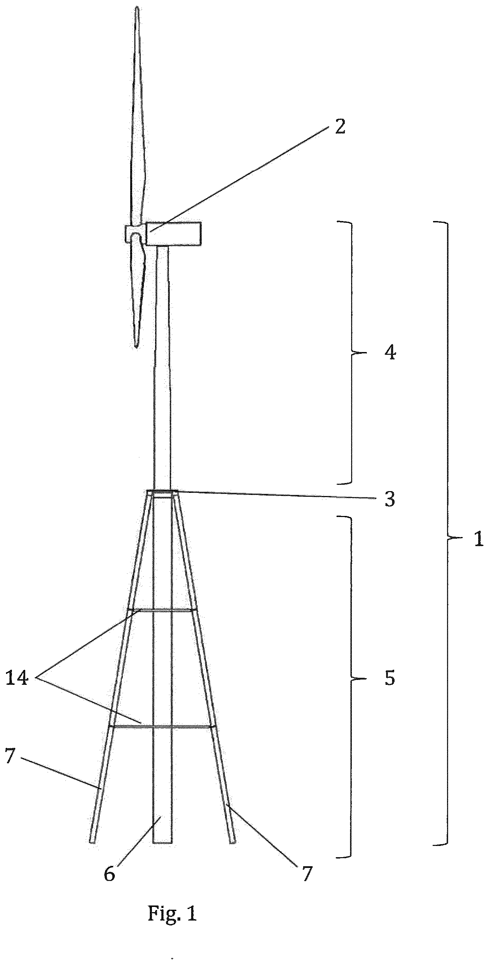

In Fig. 1 ist ein erfindungsgemäßer Turm (1) dargestellt, welcher einen unteren Turmabschnitt (5), einen oberen Turmabschnitt (4) und einen zwischen diesen Abschnitten (4, 5) angeordneten Übergangskörper (3) umfasst. Auf dem Turm (1) ist eine Windkraftanlage (2) angeordnet. Der obere Turmabschnitt (4) ist als Rohrturm ausgeführt, wie er in diesem Bereich üblich ist. Der untere Turmabschnitt (5) ist aus mehreren Einzeltürmen gebildet, wobei ein zentraler Stützturm (6) und mehrere Seitentürme (7), die vorzugsweise in einem Winkel zum Stützturm (6) geneigt angeordnet sind, vorgesehen sind. Der Übergangskörper (3) ist als massiver Plattenkörper ausgeführt und verbindet die Seitentürme (7) mit dem zentralen Stützturm (6), schließt sozusagen den unteren Turmabschnitt (5) ab, als auch den unteren Turmabschnitt (5) mit dem oberen Turmabschnitt (4). Die mehreren Seitentürme (7) sind, insbesondere gleichmäßig verteilt, um den zentralen Stützturm (6) herum angeordnet, ohne direkt mit diesem verbunden zu sein. Die Seitentürme (7) können untereinander mit Streben (14) verbunden sein. Die in Fig. 1 dargestellte Ansicht steht für eine Ausführung mit drei oder vier Seitentürmen (7), wobei nur die jeweils beiden vorderen ersichtlich sind. Der Stützturm (6) weist in der dargestellten Ausführung einen konstanten Durchmesser auf, der vorzugsweise dem unteren Durchmesser des oberen Turmabschnitts (4) entspricht.

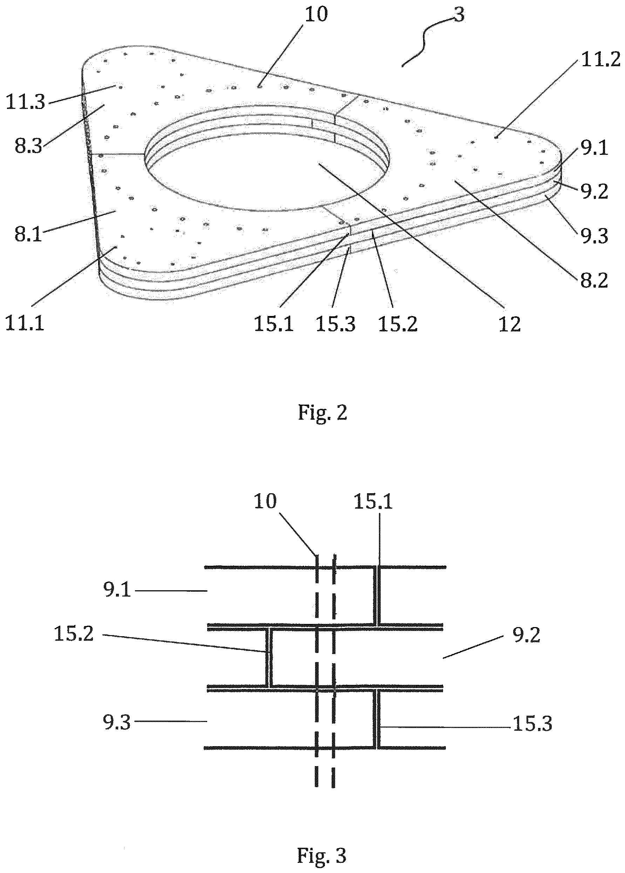

Fig. 2 stellt eine Ausführungsform eines Übergangskörpers (3) für drei Seitentürme (7) und einem gleichen Flanschdurchmesser für Stützturm (6) und oberem Turmabschnitt (4) dar. Dieser Übergangskörper (3) besteht aus drei Segmenten (8.1, 8.2, 8.3) und diese sind jeweils in mehrere, hier drei, Lagen (9.1, 9.2, 9.3) vorzugsweise aus Grobblech übereinander angeordnet. In der Mitte des Übergangskörpers (3) ist ein Durchtritt (12), also eine Öffnung, die den Innenraum des Stützturms (6) mit dem Innenraum des oberen Turmabschnitts (4) verbindet, um einfach vom Bodenniveau bis zur Windkraftanlage (2) durchgängige Aggregate, wie Service-Lift, Versorgungsleitungen und dergleichen vorsehen zu können. Jedes der Segmente (8.1, 8.2, 8.3) weist einen Lochkreis (11.1, 11.2, 11.3) als Mittel zum Verbinden mit einem Seitenturm (7) sowie einen Teilumfang des Lochkreises (10) als Mittel zur Verbindung mit dem Stützturm (6) und dem oberen Turmabschnitt (4) auf. Die Segmente (8.1, 8.2, 8.3) weisen unterschiedlich lange Schenkel auf, wodurch sich die Trennkante (15.1, 15.2, 15.3) nicht auf der Symmetrielinie des Übergangskörpers (3) liegt. Durch eine wechselseitige versetzte Anordnung der Segmente (8.1, 8.2, 8.3) in den einzelnen Lagen (9.1, 9.2, 9.3) ergibt sich ein Versatz der Trennkanten (15.1, 15.2, 15.3) in den einzelnen Lagen (9.1, 9.2, 9.3). Hierdurch wird eine von der Oberseite zur Unterseite durchgängige Trennkante (15.1, 15.2, 15.3) vermieden. Die Lochkreise (10, 11.1, 11.2, 11.3) sind durch Durchgangsbohrungen für die Aufnahme von Verschraubungen gebildet.

In Fig. 3 wird ein schematischer dargestellter Bereich der Trennkanten (15.1, 15.2, 15.3) des Übergangskörpers (3) gezeigt. Die beispielhaft angedeutete Durchgangsbohrung des Lochkreises (10) ist dabei vorzugsweise derart angeordnet, dass zumindest eine Durchgangsbohrung um Bereich der Überlappung der einzelnen Lagen (9.1, 9.2, 9.3) angeordnet, um eine formschlüssige Verbindung zu erreichen und die Segmente (8.1, 8.2, 8.3) besser zueinander zu fixieren.

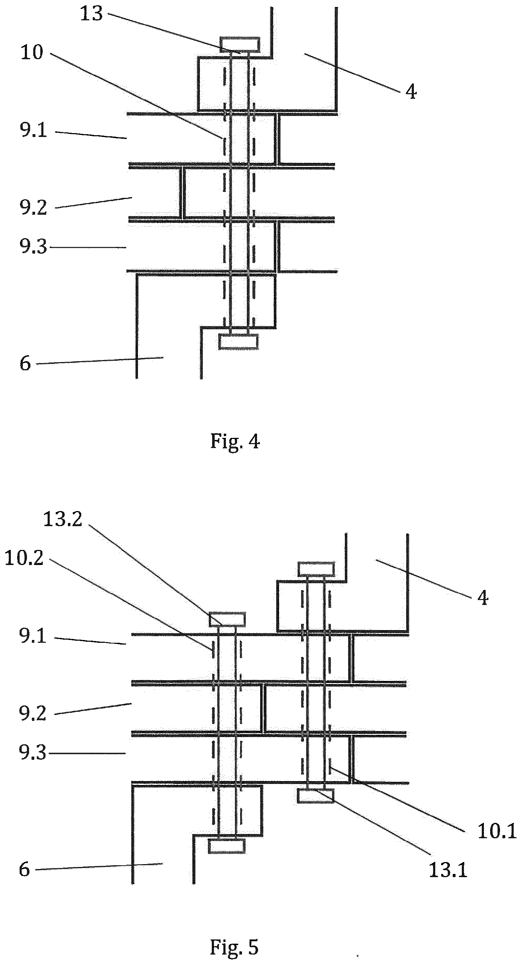

Fig. 4 entspricht Fig. 3, wobei zusätzlich der Stützturm (6) und der obere Turmabschnitt (4) jeweils mit Flansch dargestellt sind und diese mittels eines Verbindungsmittels (13), insbesondere Verschraubung, verbunden sind. Die Flansche weisen hierbei einen gleichen Durchmesser auf, weshalb diese mit dem dazwischen angeordneten Übergangskörper (3) direkt miteinander verschraubt sind. Im dargestellten Beispiel ist einer der Flansche als innenliegend und der andere als außenliegend ausgeführt. Alternativ können auch beide innenliegend beziehungsweise außenliegend ausgeführt sein.

In Fig. 5 ist analog zu Fig. 4 ein verbundener Zustand gezeigt. Allerdings weisen hier die Flansche des Stützturms (6) und des oberen Turmabschnitts (4) unterschiedliche Durchmesser auf. Daher sind zwei konzentrische Lochkreise (10.1, 10.2) als Mittel zum Verbinden vorgesehen und die Flansche sind jeweils über Verbindungsmittel (13.1, 13.2), insbesondere Verschraubungen, nur direkt mit dem Übergangskörper (3) verbunden. Auch hier ist die Darstellung mit innenliegenden beziehungsweise außenliegenden Flansch nur beispielhaft und kann durch beliebige Kombinationen ersetzt werden.

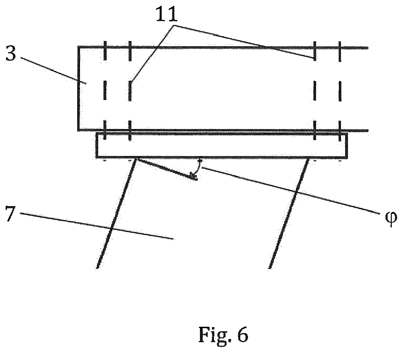

Fig. 6 zeigt einen Übergangskörper (3) aus einer Lage im Bereich eines Seitenturms (7), wobei im Übergangskörper (3) ein Lochkreis (11) als Mittel zur Verbindung mit dem Seitenturm (7), insbesondere dessen hier außenliegenden dargestellten Flansch, umfasst. Der Seitenturm (7) ist um einen Winkel ϕ gegen die Oberfläche des Übergangskörpers (3) geneigt.

### Bezugszeichenliste

- 1: Turm
- 2: Windkraftanlage
- 3: Übergangskörper
- 4: Oberer Turmabschnitt
- 5: Unterer Turmabschnitt
- 6: Stützturm
- 7: Seitenturm
- 8.1, 8.2, 8.3: Segment
- 9.1, 9.2, 9.3: Lage von Segmenten
- 10, 10.1, 10.2: Lochkreis (Mittel zum Verbinden mit Stützturm und/oder oberem Turmabschnitt)
- 11.1, 11.2, 11.3: Lochkreis (Mittel zum Verbinden mit Seitenturm)
- 12: Durchtritt
- 13, 13.1, 13.2: Verbindungsmittel (Verschraubung)
- 14: Strebe
- 15.1, 15.2, 15.3: Trennkante
- ϕ: Winkel

## Patentansprüche

1. Übergangskörper (3) zur Anordnung zwischen einem oberen Turmabschnitt (4) und einem unteren Turmabschnitt (5) eines Turms (1) für eine Windkraftanlage (2), wobei der untere Turmabschnitt (5) einen zentralen Stützturm (6) und mehrere um den Umfang des zentralen Stützturms (6) verteilte Seitentürme (7) umfasst, wobei der Übergangskörper (3) als massiver Plattenkörper ausgebildet ist und Mittel (10, 10.1, 10.2, 11, 11.1, 11.2, 11.3) zur Verbindung mit dem oberen Turmabschnitt (5), dem unteren zentralen Stützturm (6) und den äußeren Seitentürmen (7) aufweist, wobei der Übergangkörper (3) aus mehreren Segmenten (8.1, 8.2, 8.3) besteht, **dadurch gekennzeichnet, dass** der Übergangskörper (3) aus mehreren Lagen (9.1, 9.2, 9.3) von Segmenten (8.1, 8.2, 8.3) aufgebaut ist.

2. Übergangskörper (3) nach Anspruch 1, **dadurch gekennzeichnet, dass** die Segmente (8.1, 8.2, 8.3) im Wesentlichen eine gleiche Form aufweisen.

3. Übergangskörper (3) nach einem der Ansprüche 1 oder 2, **dadurch gekennzeichnet, dass** die Anzahl der Segmente (8.1, 8.2, 8.3) der Anzahl der Seitentürme (7) entspricht.

4. Übergangskörper (3) nach Anspruch 1, **dadurch gekennzeichnet, dass** die Trennkanten (15.1, 15.2, 15.3) der Segmente (8.1, 8.2, 8.3) in den mehreren Lagen (9.1, 9.2, 9.3) versetzt zueinander angeordnet sind.

5. Übergangskörper (3) nach einem der vorangegangen Ansprüche, **dadurch gekennzeichnet, dass** die Mittel (10, 10.1, 10.2, 11, 11.1, 11.2, 11.3) zur Verbindung als Lochkreise (10, 10.1, 10.2, 11, 11.1, 11.2, 11.3) mit Durchgangslöchern ausgebildet ist.

6. Übergangskörper (3) nach Anspruch 5, **dadurch gekennzeichnet, dass** die Mittel (10) zur Verbindung mit dem oberen Turmabschnitt (4) und dem zentralen Stützturm (6) durch den gleichen Lochkreis (10) oder separate, konzentrische Lochkreise (10.1, 10.2) gebildet sind.

7. Übergangskörper (3) nach einem der vorangegangenen Ansprüche, **dadurch gekennzeichnet, dass** Segmente (8.1, 8.2, 8.3) formschlüssig ineinander greifen.

8. Übergangskörper (3) nach einem der vorangegangenen Ansprüche, **dadurch gekennzeichnet, dass** der Übergangskörper (3) eine mittige Ausnehmung (12) aufweist, die vorzugsweise einen Durchmesser aufweist, der dem Innendurchmesser des oberen Turmabschnitts (4) und/oder des unteren zentralen Stützturms (6) entspricht.

9. Übergangskörper nach einem der vorangegangenen Ansprüche, **dadurch gekennzeichnet, dass** die Segmente (8,1, 8.2, 8.3) untereinander mit Verbindungsmitteln verbunden sind.

10. Turm (1) für eine Windkraftanlage (2) mit einem oberen Turmabschnitt (4) in Form eines Rohrturms und einem unteren Turmabschnitt (5) mit mehreren Seitentürmen (7) und einem den oberen Turmabschnitt (5) mit dem unteren Turmabschnitt (4) verbindenden Übergangskörper (3), wobei der untere Turmabschnitt (5) einen zentralen Stützturm (6) aufweist, **dadurch gekennzeichnet, dass** der Übergangskörper (3) ein Übergangskörper (3) nach einem der Ansprüche 1 bis 9 ist.

11. Turm (1) nach Anspruch 10, **dadurch gekennzeichnet, dass** die Seitentürme (7) und der zentrale Stützturm (6) im Wesentlichen als Hohlprofil, insbesondere rohrförmig, ausgebildet sind.

12. Verfahren zum Errichten eines Turms (2) nach Anspruch 10, wobei der untere Turmabschnitt (5) aufgestellt wird und der Übergangskörper (3) montiert wird, bevor der obere Turmabschnitt (4) und die Windkraftanlage (2) aufgestellt werden, **dadurch gekennzeichnet, dass** die Segmente (8.1, 8.2, 8.3) einzeln nacheinander auf dem unteren Turmabschnitt (5) positioniert werden und der Übergangskörper (3) nach einem der Ansprüche 1 bis 9 somit während der Montage gebildet wird.

13. Verfahren zum Errichten eines Turms (2) nach Anspruch 10, wobei der untere Turmabschnitt (5) aufgestellt wird und der Übergangskörper (3) montiert wird, bevor der obere Turmabschnitt (4) und die Windkraftanlage (2) aufgestellt werden, **dadurch gekennzeichnet, dass** die Segmente (8.1, 8.2, 8.3) des Übergangskörpers (3) vormontiert oder durch eine temporäre Montagehilfe zueinander fixiert werden und der vormontierte Übergangskörper (3) nach einem der Ansprüche 1 bis 9 auf dem unteren Turmabschnitt (5) montiert wird.

## Claims

1. Transition body (3) to be arranged between an upper tower section (4) and a lower tower section (5) of a tower (1) for a wind turbine (2), wherein the lower tower section (5) comprises a central support tower (6) and multiple side towers (7) distributed about the circumference of the central support tower (6), wherein the transition body (3) is designed as a solid plate body and has means (10, 10.1, 10.2, 11, 11.1, 11.2, 11.3) for connecting to the upper tower section (5), the lower central support tower (6) and the outer side towers (7), wherein the transition body (3) consists of multiple segments (8.1, 8.2, 8.3), **characterized in that** the transition body (3) is composed of several layers (9.1, 9.2, 9.3) of segments (8.1, 8.2, 8.3).

2. Transition body (3) according to Claim 1, **characterized in that** the segments (8.1, 8.2, 8.3) have substantially the same shape.

3. Transition body (3) according to either of Claims 1 and 2, **characterized in that** the number of the segments (8.1, 8.2, 8.3) corresponds to the number of the side towers (7).

4. Transition body (3) according to Claim 1, **characterized in that** the separating edges (15.1, 15.2, 15.3) of the segments (8.1, 8.2, 8.3) are arranged at an offset from each other in the several layers (9.1, 9.2, 9.3).

5. Transition body (3) according to one of the preceding claims, **characterized in that** the means (10, 10.1, 10.2, 11, 11.1, 11.2, 11.3) of connection are designed as bolt circles (10, 10.1, 10.2, 11, 11.1, 11.2, 11.3) with through holes.

6. Transition body (3) according to Claim 5, **characterized in that** the means (10) for connecting to the upper tower section (4) and the central support tower (6) are formed by the same bolt circle (10) or separate, concentric bolt circles (10.1, 10.2).

7. Transition body (3) according to one of the preceding claims, **characterized in that** segments (8.1, 8.2, 8.3) fit together by positive locking.

8. Transition body (3) according to one of the preceding claims, **characterized in that** the transition body (3) has a central recess (12), preferably having a diameter which corresponds to the inner diameter of the upper tower section (4) and/or the lower central support tower (6).

9. Transition body according to one of the preceding claims, **characterized in that** the segments (8.1, 8.2, 8.3) are joined together by connecting means.

10. Tower (1) for a wind turbine (2) with an upper tower section (4) in the form of a tubular tower and a lower tower section (5) having multiple side towers (7) and a transition body (3) connecting the upper tower section (5) to the lower tower section (4), wherein the lower tower section (5) comprises a central support tower (6), **characterized in that** the transition body (3) is a transition body (3) according to one of Claims 1 to 9.

11. Tower (1) according to Claim 10, **characterized in that** the side towers (7) and the central support tower (6) are configured substantially as a hollow profile, especially a tubular one.

12. Method for erecting a tower (2) according to Claim 10, wherein the lower tower section (5) is erected and the transition body (3) is mounted before the upper tower section (4) and the wind turbine (2) are erected, **characterized in that** the segments (8.1, 8.2, 8.3) are individually positioned in succession on the lower tower section (5) and the transition body (3) according to one of Claims 1 to 9 is thus formed during the mounting.

13. Method for erecting a tower (2) according to Claim 10, wherein the lower tower section (5) is erected and the transition body (3) is mounted before the upper tower section (4) and the wind turbine (2) are erected, **characterized in that** the segments (8.1, 8.2, 8.3) of the transition body (3) are premounted or fixed to each other by a temporary mounting aid and the premounted transition body (3) according to one of Claims 1 to 9 is mounted on the lower tower section (5).

## Revendications

1. Corps de transition (3) destiné à être disposé entre une partie supérieure de mât (4) et une partie inférieure de mât (5) d'un mât (1) pour une éolienne (2), la partie inférieure de mât (5) comprenant un mât de support central (6) et plusieurs mâts latéraux (7) répartis autour de la périphérie du mât de support central (6), le corps de transition (3) étant réalisé sous forme de corps plein formant plaque, et comprenant des moyens (10, 10.1, 10.2, 11, 11.1, 11.2, 11.3) de liaison à la partie supérieure de mât (5), au mât de support central inférieur (6) et aux mâts latéraux extérieurs (7), le corps de transition (3) étant constitué de plusieurs segments (8.1, 8.2, 8.3), **caractérisé en ce que** le corps de transition (3) est constitué de plusieurs couches (9.1, 9.2, 9.3) de segments (8.1, 8.2, 8.3).

2. Corps de transition (3) selon la revendication 1, **caractérisé en ce que** les segments (8.1, 8.2, 8.3) présentent sensiblement une forme identique.

3. Corps de transition (3) selon la revendication 1 ou 2, **caractérisé en ce que** le nombre de segments (8.1, 8.2, 8.3) correspond au nombre de mâts latéraux (7).

4. Corps de transition (3) selon la revendication 1, **caractérisé en ce que** les arêtes de séparation (15.1, 15.2, 15.3) des segments (8.1, 8.2, 8.3) sont disposées de manière décalée les unes par rapport aux autres dans les multiples couches (9.1, 9.2, 9.3).

5. Corps de transition (3) selon l'une des revendications précédentes, **caractérisé en ce que** les moyens (10, 10.1, 10.2, 11, 11.1, 11.2, 11.3) de liaison sont réalisés sous forme de cercles de trous (10, 10.1, 10.2, 11, 11.1, 11.2, 11.3) comprenant des trous traversants.

6. Corps de transition (3) selon la revendication 5, **caractérisé en ce que** les moyens (10) de liaison à la partie supérieure de mât (4) et au mât de support central (6) sont formés par le même cercle de trous (10) ou des cercles de trous (10.1, 10.2) concentriques séparés.

7. Corps de transition (3) selon l'une des revendications précédentes, **caractérisé en ce que** des segments (8.1, 8.2, 8.3) s'interpénètrent par complémentarité de forme.

8. Corps de transition (3) selon l'une des revendications précédentes, **caractérisé en ce que** le corps de transition (3) comprend un évidement central (12) qui présente de préférence un diamètre qui correspond au diamètre intérieur de la partie supérieure de mât (4) et/ou du mât de support central inférieur (6).

9. Corps de transition selon l'une des revendications précédentes, **caractérisé en ce que** les segments (8,1, 8.2, 8.3) sont reliés les uns aux autres à l'aide de moyens de liaison.

10. Mât (1) pour une éolienne (2) comprenant une partie supérieure de mât (4) sous la forme d'un mât tubulaire et une partie inférieure de mât (5) dotée de plusieurs mâts latéraux (7) et d'un corps de transition (3) reliant la partie supérieure de mât (5) à la partie inférieure de mât (4), la partie inférieure de mât (5) comprenant un mât de support central (6), **caractérisé en ce que** le corps de transition (3) est un corps de transition (3) selon l'une des revendications 1 à 9.

11. Mât (1) selon la revendication 10, **caractérisé en ce que** les mâts latéraux (7) et le mât de support central (6) sont réalisés sensiblement sous forme de profilé creux, en particulier tubulaire.

12. Procédé permettant d'ériger un mât (2) selon la revendication 10, dans lequel la partie inférieure de mât (5) est mise en place et le corps de transition (3) est monté, avant que la partie supérieure de mât (4) et l'éolienne (2) ne soient mises en place, **caractérisé en ce que** les segments (8.1, 8.2, 8.3) sont positionnés individuellement les uns après les autres sur la partie inférieure de mât (5) et le corps de transition (3) selon l'une des revendications 1 à 9 est ainsi formé pendant le montage.

13. Procédé permettant d'ériger un mât (2) selon la revendication 10, dans lequel la partie inférieure de mât (5) est mise en place et le corps de transition (3) est monté, avant que la partie supérieure de mât (4) et l'éolienne (2) ne soient mises en place, **caractérisé en ce que** les segments (8.1, 8.2, 8.3) du corps de transition (3) sont prémontés ou sont fixés les uns aux autres au moyen d'un auxiliaire de montage temporaire et le corps de transition prémonté (3) selon l'une des revendications 1 à 9 est monté sur la partie inférieure de mât (5).
